Europäisches Patentamt

(19) European Patent Office

Office européen des brevets

(11) Publication number: **0 094 863**

**A1**

## (12) EUROPEAN PATENT APPLICATION

(21) Application number: **83400889.8**

(22) Date of filing: **03.05.83**

(51) Int. Cl.³: **G 01 N 27/16**

(30) Priority: **13.05.82 US 377897**

(43) Date of publication of application:
**23.11.83 Bulletin 83/47**

(84) Designated Contracting States:
**DE GB NL**

(71) Applicant: **THE BENDIX CORPORATION**
**Executive Offices Bendix Center**
**Southfield Michigan 48037(US)**

(72) Inventor: **Milco, Gary Alan**
**40 Harbor Oaks Circle**
**Safety Harbor Florida 33572(US)**

(74) Representative: **Brullé, Jean et al,**
**Service Brevets Bendix 44, rue François 1er**
**F-75008 Paris(FR)**

(54) **Catalytically activated gas sensor having immunity to catalytic poisons.**

(57) A sensor pellet (10) comprising a filament of resistance wire formed into a coil, a ceramic body (11) encapsulating the coil and a catalytic coating on the surface of the body is enclosed in a gas permeable housing (22) having a volume much larger than the pellet's volume. The housing (22) is packed full with powdered zeolite (21) which traps and immobilizes compounds poisonous to the sensor catalyst while permitting free passage of combustible gasses to the sensor.

*FIG. 1*

CATALYTICALLY ACTIVATED GAS SENSOR
HAVING IMMUNITY TO CATALYTIC POISONS

The present invention relates to combustible gas sensors. More particularly, it relates to a catalytically activated combustible gas sensor having a zeolite shield to protect the detector catalyst against poisoning.

Catalytically activated combustible gas sensors of the type described in U.S. Patent 3,092,799 to Baker are in widespread use. Such sensors comprise a filament of fine wire embedded in a ceramic pellet, the outer surface of which is treated with a catalyst in the form of platinum or paladium. An electrical current is passed through the filament to heat the pellet to a temperature substantially above ambient. Combustible gases contacting the catalytic surface of the pellet are consumed at lower than normal ignition temperature, causing further heating of the pellet and a consequent change in the electrical resistance of the filament. The change in filament resistance is detected by appropriate instrumentation to provide a warning of the presence of the combustible.

It is known that certain materials poison the catalyst and render the same ineffective upon contact therewith, causing the sensor to be useless for its intended purpose. One prior method of detering such poisoning was to pass the gases under test through an activated charcoal filter prior to their exposure to the catalytic sensor. Such filters have not proven satisfactory in field operations because their short effective life requires frequent replacement. In many industrial applications sensors are located in inaccessible sites and are unattended except for monitoring output indications at a distant control station. The imposition of a periodic maintenance routine for filter replacement upon such installations is not welcomed by the operators and many have sought alternative methods of analysis which are not subject to failure by contamination.

The problem of the poisoning of catalytically activated sensors is addressed in U.S. Patent 4,111,658 to Firth et al. and in U.S. Patent 4,246,228 to Jones et al. The solution there proposed is to restructure the sensor pellet by replacing the former ceramic body and catalytic surface coating with a pellet body

comprising a homogenous mixture of an oxidation catalyst material and a zeolite material. The most frequently encountered compounds which act as poisons to the catalyst have substantially larger sized molecules than do the combustible gases which react exothermally with the catalyst. In theory, the large molecules of the poisons are trapped and immobilized in the pores of the zeolite, while the smaller molecules of the combustible are free to migrate through the sensor body to react at the catalyst sites.

The sensors described in the Firth et al. and Jones et al. patents possess certain limitations which result in less than optimum performance in atmospheres containing catalytic poisons. Catalytically activated sensors necessarily operate at temperatures substantially above the ambient. To preserve efficiency, heat losses from the sensor must be kept to a minimum and to preserve sensitivity the mass of the sensor body must be kept low to minimize thermal inertia. These requirements lead to a sensor having a small surface area and a small mass.

When the sensor body is formed of zeolite material the temperature of the entire mass of the zeolite is raised to or above the temperature at which combustibles react with the contained catalyst. At such high temperatures the absorptive capacity of the zeolite is significantly reduced. When the catalytic particles are dispersed through the zeolite body of the sensor, the catalytic particles at the surface of the sensor body come into immediate contact with any contaminants present in the sample gas and promptly lose effectiveness, degrading the sensitivity of the sensor. The loss in sensor sensitivity progresses as the ability of the contaminants to penetrate deeper and deeper into the sensor body increases due to progressive saturation of the protective zeolite and to the increasing temperature level. Thus the sensitivity of the sensor decreases continuously during the life of the sensor and it cannot be relied upon to remain stable for any extended period of use.

It should be noted that the Jones et al. patent suggests the possibility of surrounding the pellet consisting of a homogenous mixture of oxidation catalyst and zeolite materials with additional layers of catalytically active material and/or non-catalytic porous material. Within the context of the disclosure, however, it appears that such layer or layers would be mere surface coatings which would be maintained at the normal sensor operating temperature, providing little more protection, if any, to the poisoning of catalyst sites than is available in the homogenous body alone.

The present invention employs a combustible gas sensor of conventional construction comprising a heating filament embedded in a ceramic body, the outer surface of which supports a catalytic coating. The catalyst of the sensor is protected against poisoning by a surrounding enclosure which is packed with a zeolite material in substantially pure form, the mass and volume of the surrounding zeolite being many times greater than the mass and volume of the sensor. Since the exothermic reaction of combustibles continues to occur solely at the catalytic surface of the sensor it is unnecessary to heat the zeolite at all, thereby preserving its absorptive qualities. In fact, the thermal insulating properties of the zeolite is conservative of the sensor heat; thus increasing efficiency of sensor operation at no discernible loss in sensor sensitivity. Moreover, the sensor catalyst is not subject to gradual attack by poisoning compounds during the normal sensor life because the comparatively great bulk of zeolite provides an absorptive reserve ample to extend beyond the normal sensor life. Variations in sensor sensitivity outside the range of those occurring in use in an uncontaminated atmosphere are therefore not observed.

Briefly, the invention comprises a catalytically activated combustible gas sensor enclosed in a housing having at least one gas pervious wall. The interior volume of the housing is much larger than the volume of the sensor and is packed with unadulterated powdered zeolite so as to completely surround the sensor with material which absorbs and immobilizes any gases or vapors poisonous to the sensor catalyst while permitting free passage of combustible gases to the sensor.

An advantage of the present invention is to protect a catalytically activated combustible gas sensor against inactivation by compounds capable of poisoning the catalyst thereof.

Another advantage of the invention is to improve the efficiency of a catalytically activated combustible gas sensor having immunity to catalytic poisons by maintaining the power consumption of the sensor at a minimum.

A further advantage of the invention is that the response characteristics of the poison immune sensor are not altered throughout the life of the sensor by the means for preventing poisoning of the catalyst.

The manner of carrying out the invention is described in detail below with reference to the drawings illustrating one embodiment of the invention, in which:

Fig. 1 is a cross section of the sensor of the invention; and

Fig. 2 is a schematic diagram of a bridge circuit commonly used to provide an electrical signal related to the concentration of combustible gas to which the sensor is exposed.

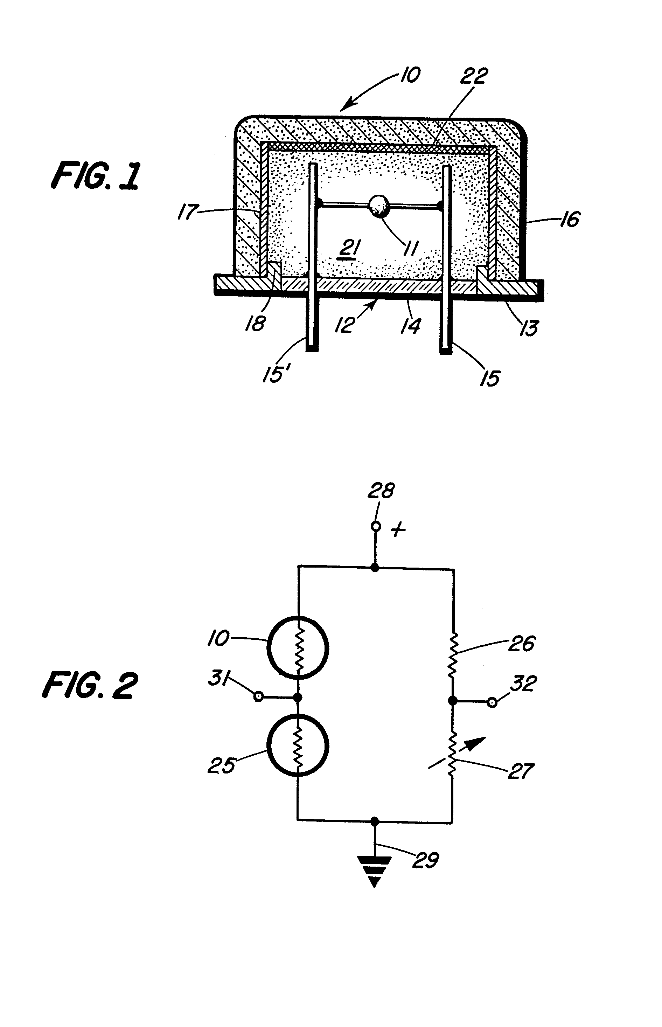

Referring to Fig. 1, the protected sensor 10 of the invention comprises a ceramic pellet 11 within which is embedded a filament of resistance wire. The outer surface of the pellet is coated with a catalyst such as platinum or palladium, as described in the aforesaid U.S. Patent 3,092,799. The pellet 11 is comparatively minute and the end leads of the filament extending beyond the body are delicate. To facilitate handling of the pellet 11 and the connection thereof in an electrical measuring circuit, sensors are ordinarily mounted in a header 12 comprising a metal ring 13 surrounding a disk 14 of glass or other insulating material. A pair of rigid metal posts 15, 15' secured in disk 14 by glass to metal seals, or by suitable adhesive if the disk be of other material, extend through the disk for mounting the pellet 11 spaced above the header and for establishing electrical connections to the sensor through the lower ends of the posts below the header. The end leads of the filament of pellet 11 are attached to posts 15, 15' by welds or compression bonds. A sintered metal cap 16, soldered at its lower edge to ring 13 protects the sensor against damage and serves as a flame arrestor while permitting the free passage of gases to the sensor.

The structure of Fig. 1 as thus far described is conventional and it provides a sensor assembly satisfactory for use in detecting combustible gases in atmospheres free from substances which are poisonous to the sensor catalyst. In accordance with the invention, protection against catalytic poisons is gained by completely filling the space surrounding the pellet 11 with a zeolite capable of entrapping catalytically poisonous substances likely to be present. A thin walled metal cylinder 17 having dimensions conforming to the inner height and diameter of cap 16 is secured at its lower edge to an upstanding flange 18 formed integrally with ring 13. Cylinder 17 is packed full with a zeolite powder 21, completely immersing the pellet 11 in a volume of zeolite many times the volume of the sensor. Typical dimensions for cylinder 17 are 6.5 mm. in height and 8 mm. in diameter. Pellet 11 is approximately spherical with a diameter of about 0.4 mm. Hence, the volume of zeolite contained in cylinder 17 is of the order of $10^4$ times the volume of the sensor and the ratio of the mass of the zeolite to that of the sensor is in similar proportion. The top of cylinder 17 is closed with a gas pervious disk 22 of filter paper or the like. After filling the cylinder 17 with the zeolite, cap 16 is installed to protect the assembly against damage and to provide a flame arrestor to permit safe operation of the sensor in an explosive atmosphere.

It should be noted that the cylinder 17 is provided merely for convenience when the zeolite is packed manually into the space enclosed by header 12 and cap 16. Other methods of filling this void, such as blow filling through a sealable aperture in header 12 could be employed, in which case the cylinder 17 and disk 22 could be eliminated.

The zeolite material 21 may be selected from any of the materials of such group possessing the property of trapping the contaminant likely to be encountered at the site of use of the sensor. The material preferred for its effectiveness in blocking the passage of silicone compounds to the sensor is a zeolite marketed by Linde Division of Union Carbide Corporation, Danbury, Connecticut under the name Linde Molecular Sieve Catalyst Base LZ-Y62 Powder.

0094863

- 6 -

Fig. 2 is a schematic of a bridge circuit commonly used to provide a signal output from combustible gas sensors of the type here involved. The protected sensor 10 of Fig. 1 is connected in series with a reference resistor 25 which comprises an assembly identical in all respects to sensor 10, including the zeolite packing, except that the catalytic coating of pellet 11 has been omitted or deliberately poisoned. Series connected balancing resistors 26 and 27 are connected in parallel with the sensor branch 10 and 25 and the bridge is energized by a direct voltage applied to terminals 28 and 29. Signal voltage is taken from terminals 31 and 32. The purpose of reference resistor 25 is to compensate for changes in the resistance of sensor 10 induced by ambient temperature changes. The bridge is balanced by adjusting variable resistor 27 for zero signal output in the absence of a combustible gas. Thereafter, the appearance of a signal voltage between terminals 31 and 32 will be due to the presence of a combustible gas which will cause a temperature rise and change of resistance of sensor 10 but no such changes will occur in reference resistor 25.

CLAIMS :

1. A poison immune catalytically activated combustible gas sensor (10) comprising a filament of resistance wire embedded in a ceramic pellet (11) having a coating of catalytic material, characterized by a gas pervious housing (22) enclosing said pellet (11) and a packing of unadulterated zeolite material (21) filling said housing and completely surrounding said pellet.

2. A sensor according to claim 1, further characterized in that the volume enclosed by said housing and the volume of zeolite material (21) contained therein are each many times greater than the volume of said pellet (11).

FIG. 1

FIG. 2

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-B-2 816 104 (ENGLISH ELECTRIC VALVE CO.) * Claim; column 1, line 55 - column 2, line 53; figure * | 1 | G 01 N 27/16 |
| A | US-A-4 242 302 (K. KITAMURA et al.) * Claim 4; abstract; column 2, lines 42-55; figure 1 * | 1,2 | |
| A | EP-A-0 032 844 (J & S SIEGER LTD.) * Claims 1, 2; abstract; figure 1 * | 1 | |
| A | DE-A-2 750 161 (ENGLISH ELECTRIC VALVE CO.) * Claims 1, 3; page 5, line 19 - page 6, line 4; figures 1, 2 * & US-A-4 246 228 (Cat. D, A) | 1 | TECHNICAL FIELDS SEARCHED (Int. Cl. ³)  G 01 N 27/00 |

The present search report has been drawn up for all claims

| Place of search BERLIN | Date of completion of the search 29-07-1983 | Examiner HOFMANN D G |
|---|---|---|